(19) **Europäisches Patentamt / European Patent Office / Office européen des brevets**

(11) **EP 3 838 503 B1**

(12) **EUROPEAN PATENT SPECIFICATION**

(45) Date of publication and mention
of the grant of the patent:
**01.05.2024 Bulletin 2024/18**

(21) Application number: **19216519.9**

(22) Date of filing: **16.12.2019**

(51) International Patent Classification (IPC):
**B25J 9/16** *(2006.01)*    **G05B 13/02** *(2006.01)*
**G06N 3/006** *(2023.01)*    **G06N 5/01** *(2023.01)*
**G06N 7/01** *(2023.01)*    **G06N 20/10** *(2019.01)*

(52) Cooperative Patent Classification (CPC):
**B25J 9/163; G05B 13/0265; G06N 3/006;**
**G06N 5/01; G06N 7/01; G06N 20/10**

(54) **METHOD FOR CONTROLLING A ROBOT AND ROBOT CONTROLLER**

VERFAHREN ZUR STEUERUNG EINES ROBOTERS UND ROBOTERSTEUERUNG

PROCÉDÉ DE COMMANDE D'UN ROBOT ET DISPOSITIF DE COMMANDE DE ROBOT

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**23.06.2021 Bulletin 2021/25**

(73) Proprietor: **Robert Bosch GmbH**
**70442 Stuttgart (DE)**

(72) Inventors:
• **Rozo, Leonel**
  **71032 Boeblingen (DE)**
• **Jaquier, Noemie**
  **71032 Boeblingen (DE)**

(56) References cited:
• **Noémie Jaquier ET AL: "Bayesian Optimization
  Meets Riemannian Manifolds in Robot
  Learning", , 11 October 2019 (2019-10-11), pages
  1-14, XP055686156, arxiv.org Retrieved from the
  Internet:
  URL:https://arxiv.org/pdf/1910.04998.pdf
  [retrieved on 2020-04-16]**
• **MOJMIR MUTNÝ ET AL: "Efficient high
  dimensional Bayesian optimization with
  additivity and quadrature Fourier features",
  ADVANCES IN NEURAL INFORMATION
  PROCESSING SYSTEMS 31, 1 January 2019
  (2019-01-01), XP055707034, DOI:
  10.3929/ethz-b-000309658 ISBN:
  978-1-5108-8447-2**
• **Kirthevasan Kandasamy ET AL: "High
  Dimensional Bayesian Optimisation and Bandits
  via Additive Models", , 5 March 2015 (2015-03-05),
  XP055707032, Retrieved from the Internet:
  URL:http://proceedings.mlr.press/v37/kanda
  samy15.pdf [retrieved on 2020-06-19]**
• **CHUN-LIANG LI ET AL: "High Dimensional
  Bayesian Optimization via Restricted Projection
  Pursuit Models", PROCEEDINGS OF THE 19TH
  INTERNATIONAL CONFERENCE ON ARTIFICIAL
  INTELLIGENCE AND STATISTICS, 2016, 1
  January 2016 (2016-01-01), pages 1-9,
  XP055707022,**
• **YUAN KAI ET AL: "Bayesian Optimization for
  Whole-Body Control of High-Degree-of-Freedom
  Robots Through Reduction of Dimensionality",
  IEEE ROBOTICS AND AUTOMATION LETTERS,
  IEEE, vol. 4, no. 3, 1 July 2019 (2019-07-01), pages
  2268-2275, XP011715836, DOI:
  10.1109/LRA.2019.2901308 [retrieved on
  2019-03-18]**
• **MIAO ZHANG ET AL: "High Dimensional
  Bayesian Optimization via Supervised
  Dimension Reduction", ARXIV.ORG, CORNELL
  UNIVERSITY LIBRARY, 201 OLIN LIBRARY
  CORNELL UNIVERSITY ITHACA, NY 14853, 21
  July 2019 (2019-07-21), XP081445606,**
• **RICCARDO MORICONI ET AL: "High-dimensional
  Bayesian optimization using low-dimensional
  feature spaces", ARXIV.ORG, CORNELL
  UNIVERSITY LIBRARY, 201 OLIN LIBRARY
  CORNELL UNIVERSITY ITHACA, NY 14853, 27
  February 2019 (2019-02-27), XP081639616,**

**EP 3 838 503 B1**

**(Cont. next page)**

- Z Wang ET AL: "Bayesian Optimization in High Dimensions via Random Embeddings", IJCAI-13: proceedings of the Twenty-Third International Joint Conference on Artificial Intelligence: Beijing, China, 3-9 August 2013. - Vol. 3, 1 January 2013 (2013-01-01), pages 1778-1784, XP055707037,

**Description**

The present disclosure relates to methods for controlling a robot and robot controllers.

Bayesian optimization (BO) recently became popular in robotics to optimize control parameters and parametric policies in direct reinforcement learning due to its data efficiency and gradient-free approach.

However, performance of Bayesian optimization for optimizing robot control parameters may be seriously compromised when the parameter space is high-dimensional. Further, it should be noted that parameter spaces in robot control may be non-Euclidean. For example, stiffness may be represented by a positive definite matrix (i.e. the parameter space forms a manifold of symmetric positive definite matrices) and vectors on a unit sphere may be used to represent orientations.

In view of the above, efficient approaches for performing Bayesian optimization for high-dimensional non-Euclidean parameter spaces are desirable.

In N. Jaquier et al, "Bayesian Optimization Meets Riemannian Manifolds in Robot Learning" (11 October 2019), a Bayesian optimization method exploiting the geometry of non-Euclidean parameter spaces, which often arise in robotics (e.g. orientation, stiffness matrix) is described.

In Wang et al., Bayesian Optimization in High Dimensions via Random Embeddings, Proceedings of the Twenty-Third International Joint Conference on Artificial Intelligence, 2013, a Bayesian optimization method exploiting the effective low dimensionality is described.

In Zang et al., High Dimensional Bayesian Optimization via Supervised Dimension Reduction, arXiv: 1907.08953, 2019, a supervised dimensionality reduction method for learning a low dimensional parameter subspace is described.

In Moriconi et al., High-dimensional Bayesian optimization using low-dimensional feature spaces, arXiv: 1902.10675, 2019, an encoder-decoder Bayesian optimization is described, wherein the encoder learns a nonlinear low dimensional representation of the parameter space.

In Antonova et al., Bayesian Optimization in Variational Latent Spaces with Dynamic Compression, arXiv: 1907.04796, 2019, a Bayesian optimization method is described, wherein the objective function is modelled in a low dimensional space and wherein the acquisition function is optimized in a high dimensional space.

In Rana et al., High Dimensional Bayesian Optimization with Elastic Gaussian Process, Proceedings of the 34th International Conference on Machine Learning, 2017, a Bayesian optimization method using an Elastic Gaussian Process is described.

In Li et al., High Dimensional Bayesian Optimization Using Dropout, Proceedings of the Twenty-Sixth International Joint Conference on Artificial Intelligence, 2017, a Bayesian optimization method is described, wherein at each iteration only a subset of dimensions is optimized.

In Yuan et al., Bayesian Optimization for Whole-Body Control of High Degrees of Freedom Robots through Reduction of Dimensionality, IEEE Robotics and Automation Letters, 2019, a Bayesian optimization method is described, wherein the parameter space is partitioned into groups and wherein each group is optimized iteratively.

In Kandasamy et al., High Dimensional Bayesian Optimization and Bandits via Additive Models, arXiv: 1503.01673, 2016, a Bayesian optimization method is described, wherein the objective function is decomposed into groups.

In Li et al., High Dimensional Bayesian Optimization via Restricted Projection Pursuit Models, Proceedings of the 19th International Conference on Artificial Intelligence and Statistics, 2016, a Bayesian optimization method is described, wherein the objective function is decomposed into a sum of functions of low-dimensional projections of the input.

In Mutny et al., Effective High Dimensional Bayesian Optimization with Additivity and Quadrature Fourier Features, 32nd Conference on Neural Information Processing Systems, 2018, a Bayesian optimization method is described, wherein the objective function is decomposed into groups and wherein the groups can overlap.

The robot control method with the features of the independent claim 1 (first example) and the robot controller with the features of the independent claim 12 (eighteenth example) allow bringing a geometry-aware dimensionality reduction into Bayesian optimization for a parameter space of high dimensionality, thus improving its performance and scalability, in particular providing faster convergence, better accuracy and lower solution variance when compared to geometry unaware Bayesian optimization implementations, and, furthermore, improving the performance and scalability for a parameter space of high dimensionality compared to other geometry-aware Bayesian optimization implementations.

The robot control method and the robot controller therefore provide an efficient approach for robot skill learning or adaptation to unseen conditions by modifying the parameters of the considered system when these display non-Euclidean geometries.

The original control parameter space is either transformed to a reduced control parameter space using a principal nested sphere algorithm, wherein the original parameter space is a sphere manifold, or the original control parameter space is transformed to a reduced control parameter space using an orthonormal projection algorithm, wherein the original parameter space is a manifold of a symmetric positive definite (SPD) matrix.

In the following, additional examples are given.

The method may further include: using the Hilbert-Schmidt independence criterion. The feature mentioned in this paragraph in combination with the first example provides a second example.

At least one observed control parameter value of the observed control parameter values may be a control parameter value in the original control parameter space measured before performing the Bayesian optimization. The feature mentioned in this paragraph in combination with any one of the first example to the second example provides a third example.

The non-Euclidean original control parameter space may be a Riemannian manifold or a subspace of a Riemannian manifold. The features mentioned in this paragraph in combination with any one of the first example to the third example provide a fourth example.

The original control parameter space and the reduced control parameter space may be of the same type of parameter space. The feature mentioned in this paragraph in combination with any one of the first example to the fourth example provides a fifth example.

The control parameter values may be described by model parameter values of a Gaussian mixture model. The objective function may be decomposed into a plurality of auxiliary objective functions and the acquisition function may be decomposed into a plurality of auxiliary acquisition functions, wherein each auxiliary objective function of the plurality of auxiliary objective functions may be assigned to an auxiliary acquisition function. An intermediate evaluation point of an auxiliary objective function may be determined in the reduced control parameter space for each auxiliary objective function of the plurality of auxiliary objective functions by searching an optimum of the respective auxiliary acquisition function in the iterative search and an evaluation point may be determined using the plurality intermediate evaluation points. The features mentioned in this paragraph in combination with any one of the first example to the fifth example provide an sixth example.

Each auxiliary objective function may include one model parameter value of the plurality of model parameter values. The feature mentioned in this paragraph in combination with the sixth example provides a seventh example. The model parameter values of the Gaussian mixture model may include at least one mean, at least one covariance, and/or at least one mixing coefficient. The features mentioned in this paragraph in combination with any one of the sixth example or the seventh example provide a eighth example.

The method may include determining the search direction according to the conjugate gradient method. By using conjugate gradient for optimization, fast convergence can be achieved. The feature mentioned in this paragraph in combination with any one of the first example to the eighth example provides a ninth example.

The method may include determining a search direction for the mapped updated candidate evaluation point by modifying the gradient of the acquisition function at the mapped updated candidate evaluation point by a multiple of the search direction at the candidate evaluation point mapped to the tangent space of the reduced control parameter space at the mapped updated candidate evaluation point by parallel transport. The features mentioned in this paragraph in combination with any one of the first example to the ninth example provide a tenth example. The method may include mapping the updated candidate evaluation point from the tangent space to the reduced control parameter space using the exponential map of the tangent space at the candidate evaluation point. The feature mentioned in this paragraph in combination with any one of the first example to the tenth example provides an eleventh example.

The reduced control parameter space is a Riemannian manifold or a subspace of a Riemannian manifold and the Bayesian optimization uses a Gaussian process as surrogate model having a kernel dependent on the induced metric of the Riemannian manifold or the subspace of the Riemannian manifold. In other words, a geometry-aware kernel is used which allows a proper measure of similarity of control parameters. The features mentioned in this paragraph are part of the first example.

The method may further include setting a parameter of the kernel to make the kernel positive definite. This allows a valid application of a Gaussian surrogate model to a non-Euclidean control parameter manifold. The feature mentioned in this paragraph in combination with any one of the first example to the eleventh example provides a twelfth example.

The method may include calculating kernel matrices for multiple randomly sampled pairs of points of the reduced control parameter space and setting a parameter of the kernel to the minimum value for which the kernel matrices are positive definite. By this procedure, a kernel parameter can be efficiently found ensuring that the kernel of the Gaussian surrogate model is positive definite. The feature mentioned in this paragraph in combination with any one of the first example to the twelfth example provides a thirteenth example.

Updating the candidate evaluation point may include a line search along the search direction. Applying a line search for updating the candidate evaluation point allows achieving a quick convergence to an optimum. The feature mentioned in this paragraph in combination with any one of the first example to the thirteenth example provides a fourteenth example.

The original control parameter space and/or the reduced control parameter space may be a sphere or a manifold of symmetric positive definite matrices. These parameter spaces are especially useful for robot control. The features mentioned in this paragraph in combination with any one of the first example to the fourteenth example provide an fifteenth example.

The objective function may represent a desired position of a part of the robot. The feature mentioned in this paragraph in combination with any one of the first example to the fifteenth example provides a sixteenth example.

The parameter values may represent stiffness, inertia, manipulability, orientation or pose. The features mentioned in this paragraph in combination with any one of the first example to the sixteenth example provide a seventeenth example.

A computer program may include instructions which, when executed by a processor, makes the processor perform a method according to any one of the first example to the seventeenth example. The feature mentioned in this paragraph provides a nineteenth example.

A computer readable medium may store instructions which, when executed by a processor, makes the processor perform a method according to any one of the first example to the seventeenth example. The feature mentioned in this paragraph provides a twentieth example.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:

Figure 1 shows a robot device arrangement.

Figure 2 shows an illustration of a sphere manifold $S^2$ whose points may for example each represent a possible orientation of a robot end-effector.

Figure 3 shows an illustration of a SPD manifold $\mathcal{S}^2_{++}$ whose points may for example each represent a stiffness ellipsoid.

Figure 4 shows diagrams showing the percentage of positive definite geodesic kernel matrices and the distribution of their minimum eigenvalue $\beta_{\min}$ as a function of $\beta$ for $\mathcal{S}^3$ and $\mathcal{S}^3_{++}$, respectively.

Figure 5 shows a flow diagram illustrating a method for controlling a robot using control parameter values from a non-Euclidean control original parameter space according to an embodiment.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

Bayesian Optimization for optimizing control parameters of high dimensionality is accompanied with high computational cost. A robot control method and a robot controller are provided, wherein the dimensionality of an original control parameter space is reduced and wherein the acquisition function of the Bayesian optimization is optimized in the reduced control parameter space using a geometry-aware Bayesian optimization, thereby lowering the computational cost.

In the following, various examples will be described in more detail.

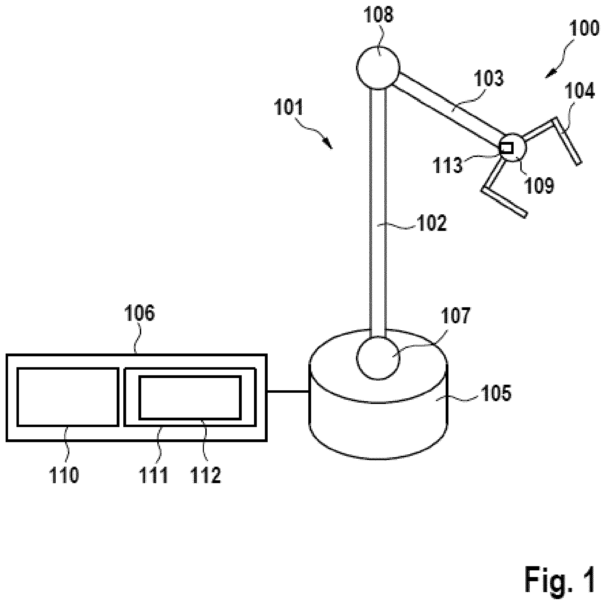

Figure 1 shows a robot device arrangement 100.

The robot device arrangement 100 includes a robot device 101, for example an industrial robot for handling, assembling or machining a workpiece. The robot device 101 includes manipulators 102, 103, 104 and a base (or support) 105 by which the manipulators 102, 103, 104 are supported. The term "manipulator" refers to the movable members of the robot device 101, the actuation of which enables physical interaction with the environment, e.g. to carry out a task. For control, the robot device arrangement 100 includes a controller 106 configured to implement the interaction with the environment according to a control program. The last member 104 (when viewed from the support 105) of the manipulators 102, 103, 104 is also referred to as the end-effector 104 and may include one or more tools such as a welding torch, gripping instrument, painting equipment, or the like.

The other manipulators 102, 103 (closer to the support 105) may form a positioning device such that, together with the end-effector 104, a robotic arm (more commonly referred to as an articulated arm) with the end-effector 104 at its end is provided. The robotic arm is a mechanical arm that can provide similar functions as a human arm (possibly with a tool at its end).

The robot device 101 may include joint elements 107, 108, 109 interconnecting the manipulators 102, 103, 104 with each other and with the support 105. A joint element 107, 108, 109 may have one or more joints, each of which may provide rotatable motion (i.e. rotational motion) and/or translatory motion (i.e. displacement) to associated manipulators relative to each other. The movement of the manipulators 102, 103, 104 may be initiated by means of actuators controlled by the controller 106.

The term "actuator" may be understood as a component adapted to affect a mechanism or process in response to be driven. The actuator can implement instructions issued by the controller 106 (the so-called activation) into mechanical movements. The actuator, e.g. an electromechanical converter, may be configured to convert electrical energy into mechanical energy in response to driving.

The term "controller" may be understood as any type of logic implementing entity, which may include, for example, a circuit and/or a processor capable of executing software stored in a storage medium, firmware, or a combination thereof, and which can issue instructions, e.g. to an actuator in the present example. The controller may be configured, for example, by program code (e.g., software) to control the operation of a system, a robot in the present example.

In the present example, the controller 106 includes one or more processors 110 and a memory 111 storing code and data based on which the processor 110 controls the robot device 101. According to various embodiments, the controller 106 controls the robot device 101 on the basis of a statistical model 112 stored in the memory 111.

A robot such as implemented by robot device arrangement 100 can take advantage of learning-from-demonstration approaches to learn to execute a task or collaborate with a human partner. Human demonstrations can be encoded by a probabilistic model (also referred to as statistical model) that represents the nominal plan of the task for the robot. The controller 106 can subsequently use the statistical model to generate the desired robot movements, possibly as a function of the state of both the human partner and the environment.

When a robot (i.e. a robot device 101 together with its controller 106) learns new skills or should adapt its behaviour to unseen conditions, its learning process should be safe, fast and data-efficient as the robot is a physical system interacting with the environment, making every single interaction costly. In reinforcement learning (RL) for robotics, such as it is applied according to various embodiments, Bayesian Optimization (BO) has gained increasing interest due to its success on optimizing parametric policies in several challenging scenarios. Its popularity is due to its ability to model complex noisy cost functions in a data-efficient manner, contrasting to data-hungry methods used in deep RL. However, Bayesian optimization performance degrades as the search space dimensionality increases, opening the door to different approaches dealing with the curse of dimensionality. Its performance also depends on the generalization capabilities of Gaussian process (GP) models (the typical surrogate model of BO), which is strongly impacted by the definition of both the mean and kernel functions.

Bayesian optimization may be widely used in diverse robotic applications, such as behaviour adaptation for damaged legged robots, controller tuning for balancing, biped locomotion, whole body control, physical human-robot interaction, and manipulation. In an embodiment like the one illustrated in figure 1 with a robotic arm, Bayesian optimization may for example be used to adapt the robot control in case of failure of one of the joints. However, embodiments are not limited to robotic arms but may also be applied to other forms of robots and applications such as those mentioned before including in particular finding optimal orientations for regulation tasks, finding an optimal stiffness matrix of an impedance control policy, which is of interest for variable impedance learning approaches.

A key aspect of the success of Bayesian optimization can be seen in the use of domain knowledge, mainly introduced into the surrogate model or the acquisition function. This prior information decreases the problem complexity and improves the convergence and accuracy of Bayesian optimization. According to various embodiments, knowledge about the geometry of the parameter space is introduced into Bayesian optimization.

Bayesian optimization (BO) is a sequential search algorithm aiming at finding a global maximizer (or minimizer) of an unknown objective function $f$, i.e. finding

$$x^* = \operatorname*{argmax}_{x \in \mathcal{X}} f(x)$$

where $\mathcal{X} \subseteq \mathbb{R}^{D_{\mathcal{X}}}$ is some design space of interest (i.e. the parameter space from which parameter values may be chosen), with $D_X$ being the dimensionality of the parameter space. The black-box function $f$ has no simple closed form, but can be observed point-wise by evaluating its value at any arbitrary query point x in the domain. This evaluation produces noise104 corrupted (stochastic) outputs $y \in \mathbb{R}$ such that $\mathbb{E}[y|f(x)] = f(x)$, with observation noise $\sigma$.

In this setting, Bayesian optimization specifies a prior belief over the possible objective functions. Then, at each iteration n, this model is refined according to observed data $\mathcal{D}_n = \left\{(x_i, y_i)\right\}_{i=1}^{n}$ via Bayesian posterior update. An acquisition function $\gamma_n : \mathcal{X} \mapsto \mathbb{R}$ is constructed to guide the search for the optimum.

This function evaluates the utility of candidate points for the next evaluation of f; therefore, the next query point $x_{n+1}$ is selected by maximizing $\gamma_n$, i.e.

$$x_{n+1} = \mathrm{argmax}_{\boldsymbol{x}}\, \gamma_n(\boldsymbol{x}; \mathcal{D}_n).$$

After N queries, the result is a final recommendation $x_N$, which represents the best estimate of the optimizer (for an iteration limit of N).

According to various embodiments, as it is typically done, the prior and posterior off are modelled using a Gaussian Process $\mathcal{GP}(\mu, k)$ with mean function $\mu : \mathcal{X} \mapsto \mathbb{R}$ and positive-definite kernel (or covariance function) $k : \mathcal{X} \times \mathcal{X} \mapsto \mathbb{R}$.

Therefore, the function f follows a Gaussian prior $f(x) \sim \mathcal{N}(\mu, K)$ where $\mu_i = \mu(x_i)$ and $K$ is the covariance matrix with $K = k(x_i, x_j)$.

With $\tilde{x}$ representing an arbitrary test point, the random variable $f(\tilde{x})$ conditioned on observations is also normally distributed with the following posterior mean and variance functions:

$$\mu_n(\tilde{\boldsymbol{x}}) = \mu(\tilde{\boldsymbol{x}}) + \boldsymbol{k}(\tilde{\boldsymbol{x}})^{\mathsf{T}}(\boldsymbol{K} + \sigma^2 \boldsymbol{I})^{-1}(\boldsymbol{y} - \boldsymbol{\mu})$$

and

$$\sigma_n^2(\tilde{\boldsymbol{x}}) = k(\tilde{\boldsymbol{x}}, \tilde{\boldsymbol{x}}) - \boldsymbol{k}(\tilde{\boldsymbol{x}})^{\mathsf{T}}(\boldsymbol{K} + \sigma^2 \boldsymbol{I})^{-1}\boldsymbol{k}(\tilde{\boldsymbol{x}})$$

where $k(\tilde{x})$ is a vector of covariance terms between $\tilde{x}$ and the observations $x_j$.

The posterior mean and variance evaluated at any point $\tilde{x}$ respectively represent the model prediction and uncertainty of the objective function at $\tilde{x}$. In Bayesian optimization, these functions are exploited to select the next query $x_{n+1}$ by means of the acquisition function. The mean and kernel functions completely specify the GP and thus the model of the function f. The most common choice for the mean function is a constant value, while the kernel typically has the property that close points in the input space have stronger correlation than distant points. One popular kernel is the squared-exponential (SE) kernel $k(x_i, x_j) = \theta\exp(-\beta d(x_i, x_j)^2)$, where d(.,.) denotes the distance between two observations and the parameters $\beta$ and $\theta$ control the horizontal and vertical scale of the function. The kernel parameters and the observation noise may be inferred via maximum likelihood estimation (MLE).

The acquisition function balances exploitation (e.g. selecting the point with the highest posterior mean) and exploration (e.g. selecting the point with the highest posterior variance) using the information given by the posterior functions. According to various embodiments, an improvement-based acquisition function is used, namely expected improvement (EI).

For EI, the next query intuitively corresponds to the point where the expected improvement over the previous best observation $f_n^*$ is maximal.

According to various embodiments, domain knowledge is included into the acquisition function by exploiting geometry-aware optimization that handle parameters lying on Riemannian manifolds.

Geometry-awareness is particularly relevant when the parameter space is not Euclidean, which is common in robotic applications, where a variety of manifolds arise. For example, forces and torques belong to the Euclidean manifold RD, stiffness, inertia and manipulability lie in the manifold of symmetric positive definite matrices S++, the special orthogonal group SO(3) or the unit-sphere S3 are used to represent orientations, and the special Euclidean group SE(3) describes robot poses.

To introduce geometry-awareness into Bayesian optimization, according to various embodiments, knowledge from Riemannian manifold theory can be seen to be brought to Bayesian optimization. More specifically, according to various embodiments, geometry-aware kernels allowing GP to properly measure the similarity between parameters lying on a Riemannian manifold are used, e.g. by the controller 106. In addition, the controller 106 uses Riemannian manifold tools to consider the geometry of the search space when optimizing the acquisition function, e.g. when adapting to a new scenario (including unseen conditions, e.g. in case of joint failure). These two features provide a fully geometry-aware Bayesian optimization framework which naturally handles the constraints of parameters lying on smooth differentiable manifolds.

In robotics, diverse type of data do not belong to a vector space and thus the use of classical Euclidean space methods for treating and analysing these variables is inadequate. An example is the unit quaternion, which may be used by the controller 106 to represent orientations, e.g. the orientation of the end-effector 104. The unit quaternion has unit norm and therefore can be represented as a point on the surface of a 3-sphere. Symmetric positive definite (SPD) matrices may also be used by the controller, e.g. in the form of stiffness and inertia matrices, or manipulability ellipsoids. Both the sphere and the space of SPD matrices can be endowed with a Riemannian metric to form Riemannian manifolds.

Intuitively, a Riemannian manifold $\mathcal{M}$ is a space for which each point locally resembles an Euclidean space.

For each point $x \in \mathcal{M}$, there exists a tangent space $\mathcal{T}_x\mathcal{M}$ equipped with a smoothly-varying positive definite inner product called a Riemannian metric. This metric permits to define curve length on the manifold. Curves representing shortest paths on the Riemannian manifold are called geodesics and are the generalization of straight lines on the Euclidean space to Riemannian manifolds, as they represent the minimum length curves between two points in $\mathcal{M}$.

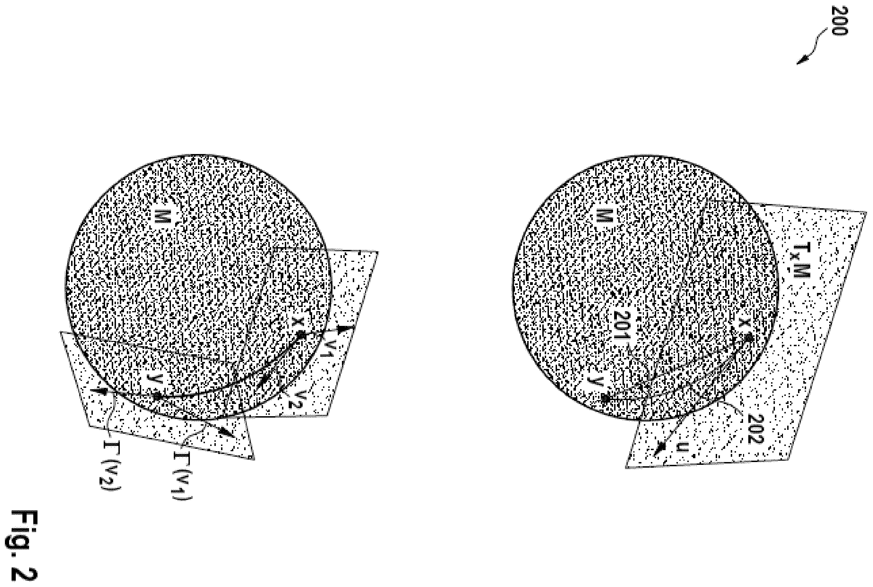

Figure 2 shows an illustration of a sphere manifold S$^2$ whose points may for example each represent a possible orientation of a robot end-effector.

Two points x and y are indicated on the sphere which may be used by the controller 106 to represent two different orientations of the robot end-effector 104.

The shortest distance between the two points in the surrounding space would be a straight line 201 while the shortest path on the manifold is a geodesic 202.

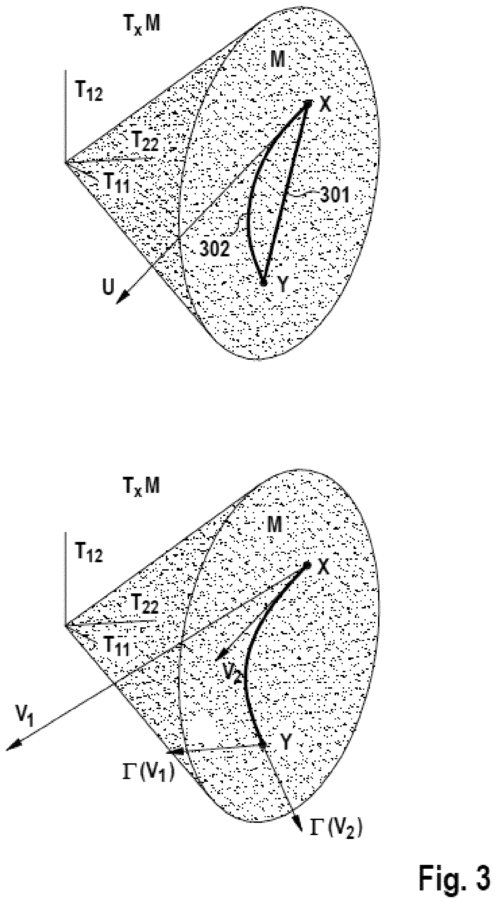

Figure 3 shows an illustration of a SPD manifold $\mathcal{S}^2_{++}$ (having the shape of a cone) whose points may for example each represent a stiffness ellipsoid.

Two points X and Y are indicated on the SPD manifold which may be used by the controller 106 to represent two different stiffness ellipsoids of the robot end-effector 104. Each point corresponds to a matrix ( $\begin{smallmatrix} T_{11} & T_{12} \\ T_{12} & T_{22} \end{smallmatrix}$ ) in the space S$_{ym}^2$ in which the manifold $\mathcal{S}^2_{++}$ is embedded.

Again, the shortest distance between the two points in the surrounding space would be a straight line 301 while the shortest path on the manifold is a geodesic 302.

In figures 2 and 3, the shortest Euclidean path 201, 301 differs from the geodesic 202, 302.

To utilize the Euclidean tangent spaces, mappings back and forth between the tangent space $\mathcal{T}_x\mathcal{M}$ ($\mathcal{T}_X\mathcal{M}$ in figure 3) may be used, which are denoted as the exponential map and the logarithmic map, respectively.

The exponential map Exp$_x$: $\mathcal{T}_x\mathcal{M} \to \mathcal{M}$ maps a point u in the tangent space of x to a point y on the manifold, so that it lies on the geodesic starting at x (X in figure 3) in the direction u (U in figure 3) such that the geodesic distance dM between x and y (Y in figure 3) is equal to norm of the distance between x and u. The inverse operation is called the logarithmic map Log$_x$: $\mathcal{M} \to \mathcal{T}_x\mathcal{M}$, i.e. $u = \text{Log}_x(y)$.

Another useful operation over manifolds is the parallel transport $\Gamma_{x \to y}$: $\mathcal{T}_x\mathcal{M} \to \mathcal{T}_y\mathcal{M}$ which moves elements between tangent spaces such that the inner product between two elements in the tangent space remains constant.

For example, in figure 2, $\Gamma(v_1)$, $\Gamma(v_2)$ are the parallel transported Vectors $v_1$ and $v_2$ from $\mathcal{T}_x\mathcal{M}$ to $\mathcal{T}_y\mathcal{M}$. Analogously in figure 3 for the vectors $\mathbf{V_1}$ and $\mathbf{V_2}$.

More generally, the unit sphere $\mathcal{S}^d$ is a d-dimensional manifold embedded in $\mathbb{R}^{d+1}$. The tangent space $\mathcal{T}_x\mathcal{S}^d$ is the hyperplane tangent to the sphere at the point x. The manifold of $D \times D$ SPD matrices $\mathcal{S}^D_{++}$ can be represented as the interior of a convex cone embedded in $SyM^D$. The operations described above and illustrated in figures 2 and 3 for D =2 are given in table 1.

Table 1

| Manifold | $d_{\mathcal{M}}(x, y)$ | $\text{Exp}_x(u)$ | $\text{Log}_x(y)$ |
|---|---|---|---|
| $S^d$ | $\arccos(\boldsymbol{x}^\top\boldsymbol{y})$ $\\ \| \log(\boldsymbol{X}^{-\frac{1}{2}}\boldsymbol{Y}\boldsymbol{X}^{-\frac{1}{2}})\|_F$ | $\boldsymbol{x}\cos(\|\boldsymbol{u}\|) + \overline{\boldsymbol{u}}\sin(\boldsymbol{u})$ $\\ \boldsymbol{X}^{\frac{1}{2}}\exp(\boldsymbol{X}^{-\frac{1}{2}}\boldsymbol{U}\boldsymbol{X}^{-\frac{1}{2}})\boldsymbol{X}^{\frac{1}{2}}$ | $d(\boldsymbol{x},\boldsymbol{y})\frac{y-x^\top y\,x}{\|y-x^\top y\,x\|}$ $\\ \boldsymbol{X}^{\frac{1}{2}}\log(\boldsymbol{X}^{-\frac{1}{2}}\boldsymbol{Y}\boldsymbol{X}^{-\frac{1}{2}})\boldsymbol{X}^{\frac{1}{2}}$ |
| $S^D_{++}$ | Parallel transport $\Gamma_{x\to y}(v)$ | | |
| $S^d$ | $\left(-\boldsymbol{x}\sin(\|\boldsymbol{u}\|)\overline{\boldsymbol{u}}^\top + \overline{\boldsymbol{u}}\cos(\|\boldsymbol{u}\|)\overline{\boldsymbol{u}}^\top + (\boldsymbol{I}-\overline{\boldsymbol{u}}\,\overline{\boldsymbol{u}}^\top)\right)v$ with $\overline{\boldsymbol{u}} = \frac{\boldsymbol{u}}{\|\boldsymbol{u}\|}$ | | |
| $S^D_{++}$ | $\boldsymbol{A}_{X\to Y}\,\boldsymbol{V}\,\boldsymbol{A}^\top_{X\to Y}$ with $\boldsymbol{A}_{X\to Y} = \boldsymbol{Y}^{\frac{1}{2}}\boldsymbol{X}^{-\frac{1}{2}}$ | | |

In the following, the geometry-aware Bayesian optimization (GaBO) framework which may for example be used by the controller 106 to naturally handle the case where the design space of parameters X is a Riemannian manifold or a subspace of a Riemannian manifold, i.e. $X \subseteq \mathcal{M}$ is described.

For this, the controller 106 models the unknown objective function f by means of a Gaussian process adapted to manifold-valued data. This is achieved by defining geometry-aware kernels measuring the similarity of the parameters on the manifold. Moreover, the controller 106 selects the next query point $x_{n+1}$ by optimizing the acquisition function on the manifold $\mathcal{M}$.

The choice of the kernel function can be seen to be crucial for the GP as it encodes the prior about the function f. As the parameter x belongs to a Riemannian manifold, this a priori knowledge is included in the choice of the kernel. A straightforward approach to adapt distance-based kernels to Riemannian manifolds is to replace the Euclidean distance d by the geodesic distance $d_{\mathcal{M}}$ in the definition of the kernel. Thus, the geodesic generalization of the SE kernel is given by

$$k(\boldsymbol{x}_i, \boldsymbol{x}_j) = \theta\exp(-\beta d_{\mathcal{M}}(\boldsymbol{x}_i, \boldsymbol{x}_j)^2)$$

It can be shown that such a kernel is valid, i.e. positive definite (PD) for all the parameters values, only if the manifold is isometric to an Euclidean space. This implies that the geodesic SE kernel is not valid for curved manifolds such as $\mathcal{S}^d$ and $\mathcal{S}^D_{++}$. To address, this, according to various embodiments, a minimum length scale parameter $\beta_{min}$ is determined such that for $\beta > \beta_{min}$ the kernel is positive definite.

Intervals of length scales $\beta$ for which kernel matrices are positive definite for a manifold of interest may be determined experimentally. For example, in order to compute $\beta_{min}$, 500 points from 10 Gaussian distributions on the manifold are sampled with random mean and covariance matrix I. Then, the corresponding kernel matrix $K_{ij} = k(x_i, x_j)$ is computed for a range of $\beta$ values with $\theta = 1$. This is for example repeated 10 times for each value of $\beta$ and the percentage of resulting PD geodesic kernel matrices K is computed. According to one embodiment, as the minimum eigenvalue function is monotone with respect to $\beta$ and $K_{\beta\to\infty} \to I$, $\beta_{min}$ set fix equal to the minimum value of $\beta$ for which 100% of the matrices K are PD.

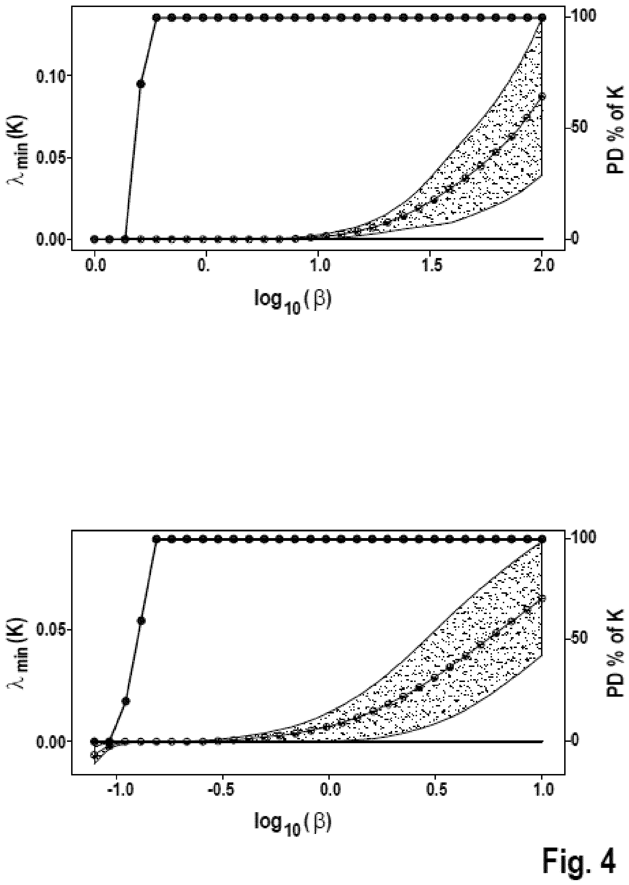

Figure 4 shows diagrams 401, 402, showing the percentage of PD geodesic kernel matrices and the distribution of their minimum eigenvalue $\beta_{\min}$ as a function of $\beta$ for $\mathcal{S}^3$ (diagram 401) and $\mathcal{S}^3_{++}$ (diagram 402).

Table 2 shows values of $\beta_{\min}$ for various manifolds which may for example be used as parameter spaces by the controller 106.

Table 2

| $\mathcal{M}$ | $\mathcal{S}^2$ | $\mathcal{S}^3$ | $\mathcal{S}^4$ | $\mathcal{S}^3_{++}$ | $\mathcal{S}^2_{++}$ |
|---|---|---|---|---|---|
| $\beta_{\min}$ | 6.5 | 2. | 1.2 | 0.6 | 0.2 |

It should be noted that other types of kernels for specific manifolds may also be used for Bayesian optimization. For example, the geodesic Laplacian kernel is valid on spheres and hyperbolic spaces. In particular, kernels specifically designed for a certain manifold (such as the Grassmannian) may be used.

When a robot controller (e.g. controller 106) performs Bayesian optimization, e.g. to adapt to a new scenario (e.g. to compensate for a joint failure in a robotic arm or a limb damage in a walking with multiple legs), the controller subsequently evaluates the unknown function $f$ to be optimized for certain $x_i$ from the parameter set, i.e. for certain robot control configurations. The unknown function $f$ may for example reflect how close to a desired position an object is placed or how close the robot moves with respect to a desired direction etc. In general, $f$ may be a cost function defining certain requirements which should be fulfilled. An example is a desired orientation, e.g. of the end-effector 104. This may be useful for tasks where the orientation reference of a controller needs to be refined to improve the task execution.

For example, a controller of a velocity-controlled robot samples an orientation reference $x \equiv \hat{q}_o$ around a prior orientation $\tilde{q}_o$, fixed by the user, with the aim of minimizing the cost function $f(q) = w_q\|\Delta(\tilde{q}, q)\|^2 + w_\tau\|\tau\|^2 + w_m$, where $q_o$ is the current end-effector orientation, and cond(M) is the condition number of the linear velocity manipulability ellipsoid. This cost function aims at minimizing the error between the prior and the current end-effector orientation with low joint torques and an isotropic manipulability ellipsoid.

Another example is finding the optimal Cartesian stiffness of a torque-controlled robotic arm implementing a Cartesian control policy $f = \boldsymbol{K}^{\mathcal{P}}(\hat{p} - p) - \boldsymbol{K}^{\mathcal{D}}\dot{p}$, where $p$ and $\dot{p}$ are the linear position and velocity of the robot end-effector, $\boldsymbol{K}^{\mathcal{P}}$ and $\boldsymbol{K}^{\mathcal{D}}$ are stiffness and damping matrices, f is the control force (transformed to desired torques via $\tau = J^T f$). The robot task consists of tracking a desired Cartesian position $\hat{p}$ while a constant external force $f^e$ is applied to its end-effector. The policy parameter corresponds to the stiffness matrix, that is $x \equiv \boldsymbol{K}^{\mathcal{P}}$. The stiffness-damping ratio is for example fixed as critically damped. Cost functions in this case may for example be $f_1(\boldsymbol{K}^{\mathcal{P}}) = w_p\|\hat{p} - p\|^2 + w_d\det(\boldsymbol{K}^{\mathcal{P}}) + w_c\text{cond}(\boldsymbol{K}^{\mathcal{P}})$ and

$f_1(\boldsymbol{K}^{\mathcal{P}}) = w_p\|\hat{p} - p\|^2 + w_d\|\tau\|^2$ for $\boldsymbol{K}^{\mathcal{P}} \in \{\mathcal{S}^2_{++}, \mathcal{S}^3_{++}\}$. The cost function f1 aims at accurately tracking the desired position using a low-volume isotropic stiffness matrix, while f2 aims at tracking the desired position accurately with low torques. For f2, a -1 reward may for example be added if the desired position is reached.

When the controller 106 has evaluated the function $f$, it can condition the Gaussian process modelling the function on the evaluations.

After refining the geometry-aware GP that models the unknown function $f$ in this manner, the controller 106 selects the next query point $x_{n+1}$ (i.e. the next point from the parameter space where the function f is to be evaluated) by maximizing the acquisition function $\gamma_n$. According to various embodiments, in order to take into account the geometry of the domain $x \subseteq \mathcal{M}$, the controller optimizes (i.e. searches for an optimum of) $\gamma_n$ using optimization techniques on manifolds. It should be noted that thus, the acquisition function is not altered but its search space is modified (compared to optimizing over the whole parameter space). In this context, optimization algorithms on Riemannian manifolds constitute a powerful alternative to constrained optimization. These geometry-aware algorithms reformulate constrained problems as an unconstrained optimization on manifolds and consider the intrinsic structure of the space of interest. Also, they tend to show lower computational complexity and better numerical properties.

According to various embodiments, the controller 106 uses a conjugate gradient (CG) algorithm on Riemannian manifolds to maximize the acquisition function $\gamma_n$ (or to minimize $\phi_n = -\gamma_n$) at each iteration. An example is the following algorithm 1.

| | Algorithm 1: Optimization of acquisition function with CG on Riemannian manifolds | | |
|---|---|---|---|
| | Input: Acquisition function $\gamma_n$, initial iterate $z_0 \in \mathcal{M}$ | | |
| | Output: Next parameter point $x_{n+1}$ | | |
| 1 | Set $\phi_n = -\gamma_n$ as the function to minimize and $\eta_0 = -\nabla \phi_n(z_0)$ as search direction; | | |
| 2 | for k = 0, 1, ... ,K do | | |
| 3 | | Compute the step size $\alpha_k$ using line search on Riemannian manifold | |
| 4 | | Set $z_{k+1} = \mathrm{Exp}_{z_k}(\alpha_k \eta_k)$; | |
| 5 | | $\beta_k^{\mathrm{HS}} = \dfrac{\langle \nabla \phi_n(z_{k+1}), \nabla \phi_n(z_{k+1}) - \nabla \phi_n(z_k) \rangle_{z_k}}{\langle \eta_k, \nabla \phi_n(z_{k+1}) - \nabla \phi_n(z_k) \rangle_{z_k}}$ Compute | |
| 6 | | $\mathrm{Set}\ \eta_{k+1} = -\nabla \phi_n(z_{k+1}) + \beta_k^{\mathrm{HS}}\ \Gamma_{z_k \to z_{k+1}}(\eta_k)$ | |
| 7 | | if convergence criterion is reached then | |
| 8 | | | break |
| 9 | | end | |
| 10 | end | | |
| 11 | $x_{n+1} = z_{k+1}$ | | |

It should be noted that the line search on the Riemannian manifold in step 3 of the algorithm means that for each candidate $\alpha$, the corresponding candidate point in the tangent space is mapped to the manifold via the exponential map and the acquisition function is evaluated for the point on the manifold.

The recursive process of algorithm 1 involves the same steps as Euclidean CG, namely: (i) a line minimization along the search direction (step 3 of algorithm 1); (ii) the iterate update along the search direction (step 4 of algorithm 1) and (iii) the computation of the next search direction combining the gradient of the function at the new iterate and the previous search direction (steps 5 and 6 of algorithm 1). The differences to the Euclidean version are:

- as the gradient $\nabla\phi(zk)$ and thus the search direction $\eta_k$, belong to the tangent space of $z_k$, the exponential map is used to update the iterate along the search direction; (2) the step size is fixed by solving $\mathrm{argmin}_{\alpha_k} \phi_n (\mathrm{Exp}_{z_k} (\alpha_k \eta_k))$ with a line search on the manifold
- the previous search direction $\eta_k$ is parallel transported to the tangent space of $z_{k+1}$ to be combined with the gradient of the new iterate

$$-\nabla \phi_n(z_{k+1}) \in \mathcal{T}_{z_{k+1}} \mathcal{M}$$

It should be noted that in this example, a CG (on manifold) with the Hastenes-Stiefel update parameter $\beta_k^{\mathrm{HS}}$, but other update techniques can also be extended to Riemannian manifolds to be used according to various embodiments.

It should further be noted that for some problems, the controller 106 may bound the search domain to a subspace (of the parameter space manifold), for example, to cope with physical limits or safety constraints of a robot device 101 when optimizing end-effector orientations or impedance parameters. In such cases, and particularly when the manifold is not a closed space, the controller 106 may limit the search domain of the GaBO by defining boundary conditions inside the parameter manifold. This means that in that case, the controller optimizes the acquisition function over a true subset

$X \subset \mathcal{M}$ of the parameter manifold $\mathcal{M}$.

For this, the controller 106 applies a bound constrained CG method extended to Riemannian manifolds to cope with boundary conditions in the optimization. For example, to do so, the steps 4-6 of algorithm 1 are updated as described in algorithm 2.

| | Algorithm 2: Update of steps 4-6 of Algorithm 1 for a domain $X \subset \mathcal{M}$ | |
|---|---|---|
| 4 | $\text{Set } z_{k+1} = \text{Exp}_{z_k}(\alpha_k \eta_k)$ | |
| | if $z_{k+1} \in X$ then | |
| | | Execute steps 5-6 of Algorithm 1 |
| | else | |
| | | Project $z_{k+1}$ to $X$ |
| | | $\text{Set } \eta_{k+1} = -\nabla \phi(z_{k+1})$ |
| | end | |

At each iteration, if the updated iterate $z_{k+1} \notin X$ it is projected back onto the feasible domain and the search direction is reinitialized. For example, in $\mathcal{S}^d$ the design space (i.e. parameter space) is bounded by setting limits on the components of $x \in \mathcal{S}^d$. If a component is outside of the limits, it is fixed as equal to the closest limit and the remaining components are reformatted (e.g. scaled) so that x still belongs to the manifold. For $\mathcal{S}^D_{++}$, limits on the eigenvalues λ of the SPD matrix may be defined. If an iterate $z_{k+1} \notin X$, it is projected back to the search domain by reducing/increasing the maximum/minimum eigenvalue of the iterate.

It should be noted that when the parameter space (i.e. the search domain) is limited to a subspace of the manifold, $\beta_{min}$ may be determined for that subspace. Thus, a lower value of $\beta_{min}$ may be achieved compared to determining $\beta_{min}$ for the whole parameter manifold. Since a high $\beta_{min}$ limits the spatial influence on the modelling of the function f, a lower $\beta_{min}$ may lead to quicker conversion.

However, as mentioned above, the Bayesian optimization performance degrades as the search space dimensionality increases. According to various embodiments, the dimensionality of an original control parameter space is reduced by introducing a geometry-aware dimensionality reduction into the above-described geometry-aware Bayesian optimization (GaBO) framework, wherein the GaBo framework may be used in the reduced control parameter space.

In the following, the high-dimensional geometry-aware Bayesian optimization (HDGaBO) framework which may for example be used by the controller 106 to naturally handle the case where the original control parameter space X (i.e. the control parameter space from which control parameter values are used to for example control a robot) is a Riemannian manifold or a subspace of a Riemannian manifold, i.e. $X \subseteq \mathcal{M}$ and where the original control parameter space is high-dimensional (i.e. has a large number of dimensions, for example 10 dimensions, for example more than 10 dimensions) is described.

For this, the controller 106 may be configured to transform the original control parameter space to a reduced control parameter space, wherein the original control parameter space may include a first number of dimensions, wherein the reduced control parameter space may include a second number of dimensions, and wherein the first number of dimensions may be higher than the second number of dimensions. In other words, the original control parameter space may be transformed by the controller 106 to a reduced control parameter space having a lower number of dimensions (i.e. a reduced dimensionality) than the original control parameter space. The original control parameter space and the reduced control parameter space may be of the same type of parameter space (for example sphere manifold, for example a SPD manifold).

The controller 106 may be configured to transform the original control parameter space to the reduced control parameter space using observed data, such as observed control parameter values (i.e. control parameters values with corresponding observed values of the unknown function). At least one observed control parameter value of the observed control parameter values may be a control parameter value in the original control parameter space observed, for example measured, before performing the Bayesian optimization.

In the following, the transformation of the original control parameter space to the reduced control parameter space, which may for example be performed by the controller 106, is described for the case where the original control parameter space is a $D$-dimensional sphere manifold $S^D$.

A subsphere $\mathcal{A}^{D-1}$ of $S^D$ may be defined by a point $v \in S^D$ and a distance $r \in \ ]0, 2\pi]$ as

$$\mathcal{A}^{D-1}(v, r) = \{x \in S^D : d_{\mathcal{M}}(v, x) = r\}.$$

The subsphere $\mathcal{A}^{D-1}$ may be an intersection of the sphere $S^D \in \mathcal{R}^{D+1}$ with a $D$-dimensional hyperplane $\{x \in \mathcal{R}^{D+1} : v^{\mathsf{T}} x - \cos(r) = 0\}$. A point $x \in S^D$ may be projected to the subsphere $\mathcal{A}^{D-1}$ as:

$$p(\boldsymbol{x}) = \frac{\sin(r)\boldsymbol{x} + \sin(d_{\mathcal{M}}(\boldsymbol{v}, \boldsymbol{x}) - r)\boldsymbol{v}}{\sin(d_{\mathcal{M}}(\boldsymbol{v}, \boldsymbol{x}))}.$$

The radius of the subsphere $\mathcal{A}^{D-1}$ may be different from "1". The points

$$x \in \mathcal{A}^{D-1}$$

may be mapped to a low-dimensional sphere $S^{D-1}$, wherein the low-dimensional sphere $S^{D-1}$ may have a radius equal to "1", by:

$$f(\boldsymbol{x}) = \frac{1}{\sin(r)} \boldsymbol{R}^{-1}(\boldsymbol{v})\boldsymbol{x},$$

wherein R is a rotation matrix that moves V to the origin. In general, the projection of a point $x \in S^D$ to a low-dimensional sphere $S^{D-1}$ may be given by $f(p(x))$. The transformation of the original control parameter space to the reduced control parameter space may include at least one projection (for example a plurality of projections) of a point $x \in S^D$ in the original control parameter space to a point $x^p$ on a sphere $S^{D-n} = S^d$, wherein $n$ is the number of projections and wherein the reduced control parameter space is a $d$-dimensional sphere manifold. Thus, the original control parameter space may include a first number of dimensions, $D$, and the reduced control parameter space may include a second number of dimensions, $d$, wherein the first number of dimensions, $D$, may be higher than the second number of dimensions, $d$.

In order to project control parameter values from the original control parameter space, $S^D$, to the reduced control parameter space, $S^d$, the parameters $\{v_k \in S^{D-k}, r_k \in \mathbb{R}\}_{k=0}^{D-d-1}$ have to be determined. The parameters $\{v_k \in S^{D-k}, r_k \in \mathbb{R}\}_{k=0}^{D-d-1}$ may be determined using the Hilbert-Schmidt independence criterion (HSIC). The HSIC is a measure of the dependence between two random variables that is obtained by computing the Hilbert-Schmidt norm of the cross-covariance operator associated with their reproducing kernel Hilbert space (RKHS).

If $\mathcal{F}$ is the Hilbert space of a function from $X$ to $\mathbb{R}$ and if $\mathcal{G}$ is the Hilbert space of a function from the space of output $y$ to $\mathbb{R}$, an empirical estimate of the HSIC may be given by:

$$\mathrm{HSIC}(\mathcal{D}_n, \mathcal{F}, \mathcal{G}) = \frac{1}{(n-1)^2}\mathrm{tr}(MHLH),$$

wherein $M, L \in \mathbb{R}^{n \times n}$ are kernel matrices with $M_{ij} = m(x_i, x_j)$ and $L_{ij} = l(y_i, y_j)$ and wherein $H \in \mathbb{R}^{n \times n}$ is the centering matrix defines as $I - \frac{1}{n}11^{\mathsf{T}}$ with 1 being a column vector of n ones. If the two random variables are independent, the HSIC is equal to "0".

In order to determine the reduced control parameter space, $S^d$, the parameters maximizing tr($MHLH$) may be determined, wherein $M$ is the kernel matrix of the projected point or projected points $x^p$. In other words, the following equation has to be solved:

$$\underset{\{v_k \in S^{D-k}, r_k \in \mathbb{R}\}_{k=0}^{D-d-1}}{\mathrm{argmax}} \mathrm{tr}(MHLH),$$

wherein $M_{ij} = m(x_i^p, x_j^p)$ and $x^p \in S^d$.

The kernel function $m$, may be determined using the above-described geodesic generalization of the squared-exponential (SE) kernel, wherein the parameters $\beta$ and $\theta$ of the kernel may be determined by an optimization technique on manifolds, wherein the manifold is $S^D \times \ldots \times S^{d+1} \times \mathbb{R} \times \ldots \times \mathbb{R}$.

In the following, the transformation of the original control parameter space to the reduced control parameter space, which may for example be performed by the controller 106, is described for the case where the original control parameter space is a $D$-dimensional SPD manifold, $S_{++}^D$.

The original control parameter space, $S_{++}^D$, may be transformed to the reduced control parameter space, $S_{++}^d$, wherein the original control parameter space may include a first number of dimensions, $D$, wherein the reduced control parameter space may include a second number of dimensions, $d$, and wherein the first number of dimensions, $D$, may be higher than the second number of dimensions, $d$.

The SPD matrix $X \in S_{++}^D$, i.e. the matrix $X$ which includes the control parameter values in the original control parameter space, may be projected to the matrix $X^p \in S_{++}^d$, i.e. the matrix $X^p$ which includes the control parameter values in the reduced control parameter space. The matrix $X \in S_{++}^D$ may be projected to the matrix $X^p \in S_{++}^d$ by $X^p = W^{\mathsf{T}}XW$, with a matrix $W \in \mathbb{R}^{d \times D}$. The matrix $X^p$ is positive definite if the matrix $W$ is a full rank, which can be achieved without a loss of generality for the affine-invariant metric by imposing orthogonality constraint on $W$ such that $W^{\mathsf{T}}W = I$. Thus, in general, $W$ may lie on a Stiefel manifold. Due to the affine-invariance of the metric, $W \in \mathcal{G}_{D,d}$ can be defined, wherein $\mathcal{G}_{D,d}$ is the Grassmann manifold corresponding to the space of d-dimensional subspaces of $\mathbb{R}^D$ .

In order to project control parameter values from the original control parameter space, $S_{++}^D$ , to the reduced control parameter space, $S_{++}^d$ , the parameter $W$ has to be determined. The parameter $W$ may be determined using the Hilbert-Schmidt independence criterion (HSIC) as described above, wherein the reduced control parameter space, $S_{++}^d$ , may be determined by maximizing tr($MHLH$), wherein $M$ is the kernel matrix of the projected point or projected points $X^p$. In other words, the following equation has to be solved:

$$\underset{W \in \mathcal{G}_{D,d}}{\operatorname{argmax}} \operatorname{tr}(MHLH) \quad ,$$

wherein $M_{ij} = m(X_i^p, X_j^p)$ and $X^p \in \mathcal{S}_{++}^d$ .

The kernel function m, may be determined using the above-described geodesic generalization of the squared-exponential (SE) kernel, wherein the parameters $\beta$ and $\theta$ of the kernel may be determined by an optimization technique on manifolds, wherein the manifold is $\mathcal{G}_{D,d}$.

According to various embodiments, the control parameter values may be described by model parameter values (i.e. a plurality of model parameter values) of a Gaussian mixture model (GMM). In other words, the objective function may have the form of a GMM. For example, GMM are often used to encode trajectories in robotics and the trajectories may be learned from demonstrations.

The probability distribution of a GMM may be given by:

$$p(x) = \sum_{k=1}^{K} \pi_k \mathcal{N}(x|\mu_k, \Sigma_k) \quad .$$

wherein $\mathcal{N}(x|\mu, \Sigma)$ is the normal distribution with mean $\mu$ and covariance $\Sigma$, wherein $\pi_K$ are the mixing coefficients or priors, and wherein $K$ is the number of components of the GMM.

According to various embodiments, the controller 106 is configured to use Bayesian optimization to refine the parameters of the GMM, namely $\{\mu_k, \Sigma_k, \pi_k\}_{k=1}^K$ . However, when optimizing the parameters of a GMM using Bayesian optimization, the dimension of the parameter space, such as the original control parameter space, increases with the number of components $K$ and with the dimensionality of the data.

Bayesian optimization (BO) is a sequential search algorithm, which in the case of a GMM is aiming at finding a global maximizer (or minimizer) of an unknown objective function $f$ such that:

$$\{\mu_k^*, \Sigma_k^*, \pi_k^*\}_{k=1}^K = \underset{\{\mu_k, \Sigma_k, \pi_k\}_{k=1}^K \in \mathcal{X}}{\operatorname{argmax}} f(\{\mu_k, \Sigma_k, \pi_k\}_{k=1}^K) \quad .$$

According to various embodiments, the controller 106 is configured to decompose the objective function into a plurality of auxiliary objective functions. Here, the objective function $f$ may be decomposed into the following group additive form:

$$f(\{\mu_k, \Sigma_k, \pi_k\}_{k=1}^{K}) = f(\mu_1)\ldots f(\mu_K)f(\Sigma_1)$$
$$\ldots f(\Sigma_K)f(\pi_1)\ldots f(\pi_K),$$

wherein $f(\mu_1)$ ... $f(\mu_K)$, $f(\Sigma_1)$ ... $f(\Sigma_K)$, and $f(\pi_1)$ ... $f(\pi_K)$ are auxiliary functions of the plurality of auxiliary functions. Thus, each auxiliary objective function of the plurality of auxiliary objective functions may include one model parameter value of the plurality of model parameter values and the model parameter values of the GMM may include at least one mean, at least one covariance, and/or at least one mixing coefficient.

Thus, the mean function of the surrogate Gaussian process may be decomposed as:

$$m(\{\mu_k, \Sigma_k, \pi_k\}_{k=1}^{K}) = m^{(\mu_1)}(\mu_1) + \ldots + m^{(\pi_K)}(\pi_K),$$

and the kernel function of the surrogate Gaussian process may be decomposed as:

$$k(\{\mu_{ki}, \Sigma_{ki}, \pi_{ki}\}_{k=1}^{K}, \{\mu_{kj}, \Sigma_{kj}, \pi_{kj}\}_{k=1}^{K}) =$$
$$k^{(\mu_1)}(\mu_{1i}, \mu_{1j}) + \ldots + k^{(\pi_K)}(\pi_{Ki}, \pi_{Kj}).$$

According to various embodiments, the controller 106 is configured to decompose the acquisition function into a plurality of auxiliary acquisition functions, wherein each auxiliary objective function of the plurality of auxiliary objective functions may be assigned to an auxiliary acquisition function. In other words, the controller 106 may be configured to determine an auxiliary acquisition function for each auxiliary objective function of the plurality of auxiliary objective functions.

According to various embodiments, at least one auxiliary objective function and the assigned auxiliary acquisition function, associated to a model component of the plurality of model components, are optimized using the GaBo framework. For example, the covariance parameter matrices $\Sigma_k$ may belong to a SPD manifold and the GaBo framework may be used to optimize the covariance parameters

According to various embodiments, the trajectories belong intrinsically to a Riemannian manifold and the probability distribution of the GMM may be given by:

$$p(x) = \sum_{k=1}^{K} \pi_k \mathcal{N}_{\mathcal{M}}(x|\mu_k, \Sigma_k),$$

wherein the Gaussian distribution is defined on the manifold with $\mu \in \mathcal{M}$ and wherein $\Sigma$ is the covariance lying in the tangent space $\mathcal{T}_\mu \mathcal{M}$. In this case, for example, the GaBo framework may be used to optimize the means $\mu_k$ and/or the covariances $\Sigma_k$.

According to various embodiments, an intermediate evaluation point of an auxiliary objective function is determined in the reduced control parameter space for each auxiliary objective function of the plurality of auxiliary objective functions by searching an optimum of the respective auxiliary acquisition function in the iterative search. An evaluation point may be determined using the plurality of intermediate evaluation points.

According to various embodiments, only a subset of GMM parameters is optimized at each iteration of the Bayesian optimization (for example at each iteration of the GaBo framework or the HDGaBo framework), wherein the subset of GMM parameters may include GMM parameters relevant for the optimization. In other words, the controller 106 may be configured to perform the above described method using the GaBo framework or may be configured to perform the above described method using the HDGaBo framework. In the case of the HDGaBo framework, the controller 106 may be configured to transform the original control parameter space to a reduced control parameter space and to perform the above described decomposition of the GMM model components and optimization using the GaBo framework in the reduced control parameter space.

According to various embodiments, the controller 106 is configured to map the evaluation point, which may be determined using GaBo, from the reduced control parameter space to the original control parameter space. Mapping the evaluation point from the reduced control parameter space to the original control parameter space may include the above describe equations used in the context of transforming the original control parameter space to the reduced control parameter space.

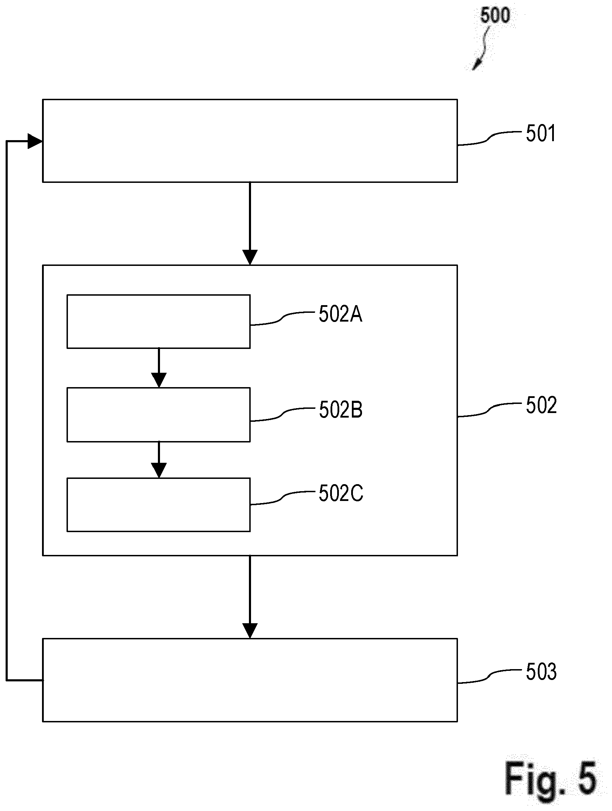

In summary, according to various embodiments, a method is provided as illustrated in figure 5.

Figure 5 shows a flow diagram 500 illustrating a method for controlling a robot (or robot device) using control parameter values from a non-Euclidean original control parameter space according to an embodiment.

The method includes performing a Bayesian optimization of an objective function representing a desired control objective of the robot over the original control parameter space for observed control parameter values in the original control parameter space, wherein the Bayesian optimization includes:

In 501, transforming the original control parameter space to a reduced control parameter space using the observed control parameter values. The original control parameter space may have a first number of dimensions and the reduced control parameter space may have a second number of dimensions, wherein the first number of dimensions may be higher than the second number of dimensions.

In 502, determining an evaluation point of the objective function in the reduced control parameter space by searching an optimum of an acquisition function in an iterative search, comprising, in each iteration:

In 502A, updating a candidate evaluation point using a search direction in the tangent space of the reduced control parameter space at the candidate evaluation point.

In 502B, mapping the updated candidate evaluation point from the tangent space to the reduced control parameter space.

In 502C, using the mapped updated candidate evaluation point as evaluation point for a next iteration until a stop criterion is fulfilled.

In 503, mapping the determined evaluation point from the second control parameter space to the original control parameter space.

According to various embodiments, the Bayesian optimization includes a plurality of iterations of the above described method (i.e., the steps 501, 502, and 503).

The robot is then controlled in accordance with a control parameter value from the original control parameter space found in the Bayesian optimization.

According to various embodiments, in other words, a reduced search space is determined for an original search space and geometry information is included into the optimization of the acquisition function when performing Bayesian optimization in the reduced search space, and an evaluation point, determined by the Bayesian optimization in the reduced search space, is mapped from the reduced search space to the original search space, e.g. for optimizing the control parameters (or a parametric policy in direct reinforcement learning cases) in the reduced search space (i.e. the reduced control parameter space) to maximize/minimize an unknown objective function in the original search space (i.e. the original control parameter space), wherein the control parameters belong to a high-dimensional original search space with a particular geometry (a Riemannian manifold). Performing the Bayesian optimization in the reduced search space significantly decreases the computational cost.

Specifically, the update of a (current) estimate in the optimization of the acquisition function in the reduced search space is made dependent on the tangent space at the current estimate. Furthermore, when the conjugate gradient method is used for searching an optimum of the acquisition function the search direction update is made dependent on the relation between the tangent spaces at the (previous) estimate and the updated estimate. Additionally, the kernel of the (e.g.) Gaussian process surrogate model of the Bayesian optimization may be geometry-dependent (or geometry-aware) such that the approach becomes fully geometry-aware as both the kernel function and the optimization of the acquisition function consider the geometry of the search space (i.e. the reduced control parameter space).

Thus, a geometry-aware Bayesian optimization (GaBO) framework is provided that exploits the geometry of the search space to properly seek optimal parameters that lie on Riemannian manifolds. To do so, a geometry-aware kernel is used that allows the GP to properly measure the similarity between parameters lying on a Riemannian manifold. Moreover, Riemannian manifold tools are exploited to consider the geometry of the search space when optimizing the acquisition function.

The objective function may be evaluated in course of the Bayesian optimization by means of sensor signals acquired by various types of sensors, including for example any type of force or torque sensor, e.g. attached at the robot end-effector, or by using joint torque sensors of the robot.

Furthermore, a high-dimensional geometry-aware Bayesian optimization (HDGaBo) framework is provided that reduces the search space of a high-dimensional original search space and that exploits the geometry of the reduced search space according to the GaBo framework.

The method may be used to control the mechanical part of any type of robot device, e.g. a robot arm or in general a physical system (having a mechanical part whose movement is controlled), like a computer-controlled machine, a vehicle, a domestic appliance, a power tool, a manufacturing machine, a personal assistant or an access control system. Based on the approaches described herein a machine learning system may be trained and adapted and may be used for the above applications.

The method of figure 5 may be performed by one or more processors. The term "processor" can be understood as any type of entity that allows the processing of data or signals. For example, the data or signals may be treated according to at least one (i.e., one or more than one) specific function performed by the processor. A processor may include an analogue circuit, a digital circuit, a composite signal circuit, a logic circuit, a microprocessor, a central processing unit (CPU), a graphics processing unit (GPU), a digital signal processor (DSP), a programmable gate array (FPGA) integrated circuit or any combination thereof or be formed from it. Any other way of implementing the respective functions, which will be described in more detail below, may also be understood as processor or logic circuitry. It will be understood that one or more of the method steps described in detail herein may be executed (e.g., implemented) by a processor through one or more specific functions performed by the processor.

According to one embodiment, the method serves to optimize a manifold-valued parameter to maximize/minimize an unknown objective function. Initially, some few values of the control parameters in the original control parameter space are tested and the corresponding value of the function measured. Then, the method comprises

(1) Modelling the unknown objective function by means of a surrogate model. It for example corresponds to a Gaussian process adapted to manifold-valued data, trained on the observed control parameter values (i.e. control parameters values with corresponding observed values of the unknown function).

(2) Transforming the original control parameter space to a reduced control parameter space using the observed control parameter values. The original control parameter space has a first number of dimensions and the reduced control parameter space has a second number of dimensions, wherein the first number of dimensions is higher than the second number of dimensions. In other words, the dimension of the control parameters is reduced.

(3) Maximizing an acquisition function constructed in function of the surrogate model on the manifold of the parameter in the reduced control parameter space. The parameters corresponding to the maximum of the acquisition function is the next query point of reduced dimensionality (i.e. the next query point in the reduced control parameter space).

(4) Projecting the next query point of reduced dimensionality to the original control parameter space.

(5) Measuring the value of the function for the computed next query point in the original control parameter space.

This procedure is iteratively repeated a determined number of iterations (N). After N iterations, the parameters corresponding to the best measured value of the function are selected.

According to various embodiments, maximizing an acquisition function (step (3)) includes: decomposing the objective function into a plurality of auxiliary objective functions; decomposing the acquisition function into a plurality of acquisition functions, wherein each auxiliary objective function of the plurality of auxiliary objective functions is assigned to an auxiliary acquisition function of the plurality of auxiliary acquisition function; maximizing each auxiliary acquisition function of the plurality of auxiliary acquisition functions, wherein the parameters corresponding to the maximum of the respective auxiliary acquisition function is the intermediate next query point of reduced dimensionality; and determining the next query point of reduced dimensionality using the plurality of intermediate next query points of reduced dimensionality.

Although specific embodiments have been illustrated and described herein, it will be appreciated by those of ordinary skill in the art that a variety of alternate and/or equivalent implementations may be substituted for the specific embodiments shown and described without departing from the scope of the present invention. This application is intended to cover any adaptations or variations of the specific embodiments discussed herein. Therefore, it is intended that this invention be limited only by the claims.

**Claims**

1. A computer-implemented method for controlling a robot (100) using control parameter values from a non-Euclidean original control parameter space, comprising:

Performing a Bayesian optimization of an objective function representing a desired control objective of the robot over the original control parameter space for observed control parameter values in the original control parameter space; and

Controlling the robot in accordance with a control parameter value from the original control parameter space found in the Bayesian optimization;

**characterized in that** the Bayesian optimization comprises:

Transforming (501) the original control parameter space to a reduced control parameter space using the observed control parameter values, wherein the original control parameter space comprises a first number of dimensions, wherein the reduced control parameter space comprises a second number of dimensions, and wherein the first number of dimensions is higher than the second number of dimensions,

wherein the reduced control parameter space is a Riemannian manifold or a subspace of a Riemannian manifold and wherein the Bayesian optimization uses a Gaussian process as surrogate model having a kernel dependent on the induced metric of the Riemannian manifold or the subspace of the Riemannian manifold,

wherein the original control parameter space is transformed to a reduced control parameter space using a principal nested sphere algorithm, wherein the original parameter space is a sphere manifold, or using an orthonormal projection algorithm, wherein the original parameter space is a manifold of a symmetric positive definite, SPD, matrix;

Determining (502) an evaluation point of the objective function in the reduced control parameter space by searching an optimum of an acquisition function in an iterative search, comprising, in each iteration,

• updating (502A) a candidate evaluation point using a search direction in a tangent space of the reduced control parameter space at the candidate evaluation point;

• mapping (502B) the updated candidate evaluation point from the tangent space to the reduced control parameter space; and

• using (502c) the mapped updated candidate evaluation point as candidate evaluation point for a next iteration until a stop criterion is fulfilled; and Mapping (503) the determined evaluation point from the reduced control

parameter space to the original control parameter space.

2. Method according to claim 1, wherein the step of determining (502) an evaluation point of the objective function in the reduced control parameter space by searching an optimum of an acquisition function in an iterative search further comprises: wherein the control parameter values are described by model parameter values of a Gaussian mixture model, wherein the objective function is decomposed into a plurality of auxiliary objective functions, wherein the acquisition function is decomposed into a plurality of auxiliary acquisition functions, wherein each auxiliary objective function of the plurality of auxiliary objective functions is assigned to an auxiliary acquisition function, wherein an intermediate evaluation point of an auxiliary objective function is determined in the reduced control parameter space for each auxiliary objective function of the plurality of auxiliary objective functions by searching an optimum of the respective auxiliary acquisition function in the iterative search, and wherein an evaluation point is determined using the plurality of intermediate evaluation points.

3. Method according to claim 2, wherein each auxiliary objective function comprises one model parameter value of the plurality of model parameter values.

4. Method according to any one of claims 1 to 3, wherein at least one observed control parameter value of the observed control parameter values is a control parameter value in the original control parameter space measured before performing the Bayesian optimization.

5. Method according to any one of claims 1 to 4, wherein the non-Euclidean original control parameter space is a Riemannian manifold or a subspace of a Riemannian manifold.

6. Method according to any one of claims 1 to 5, wherein the original control parameter space and the reduced control parameter space are of the same type of parameter space.

7. Method according to any one of claims 1 to 6, wherein the reduced control parameter space is a sphere or a manifold of symmetric positive definite matrices.

8. Method according to any one of claims 1 to 7, comprising determining a search direction for the mapped updated candidate evaluation point by modifying the gradient of the acquisition function at the mapped updated candidate evaluation point by a multiple of the search direction at the candidate evaluation point mapped to the tangent space of the reduced control parameter space at the mapped updated candidate evaluation point by parallel transport.

9. Method according to any one of claims 1 to 8, comprising mapping the updated candidate evaluation point from the tangent space to the reduced control parameter space using the exponential map of the tangent space at the candidate evaluation point.

10. Method according to any one of claims 1 to 9, wherein the objective function represents a desired position of a part of the robot.

11. Method according to any one of claims 1 to 10, wherein the parameter values represent stiffness, inertia, manipulability, orientation or pose.

12. A robot controller configured to perform the method of any one of claims 1 to 11.

13. Computer program comprising instructions which, when executed by a processor, makes the processor perform a method according to any one of claims 1 to 11.

14. Computer readable medium storing instructions which, when executed by a processor, makes the processor perform a method according to any one of claims 1 to 11.

**Patentansprüche**

1. Computerimplementiertes Verfahren zum Steuern eines Roboters (100) unter Verwendung von Steuerparameterwerten aus einem nichteuklidischen ursprünglichen Steuerparameterraum, umfassend:

Durchführen einer Bayes'schen Optimierung einer Zielfunktion, die ein gewünschtes Steuerziel des Roboters über den ursprünglichen Steuerparameterraum für beobachtete Steuerparameterwerte im ursprünglichen Steuerparameterraum darstellt; und
Steuern des Roboters gemäß einem Steuerparameterwert aus dem ursprünglichen Steuerparameterraum, der in der Bayes'schen Optimierung enthalten ist; **dadurch gekennzeichnet, dass** die Bayes'sche Optimierung umfasst:

Umwandeln (501) des ursprünglichen Steuerparameterraums in einen reduzierten Steuerparameterraum unter Verwendung der beobachteten Steuerparameterwerte, wobei der ursprüngliche Steuerparameterraum eine erste Anzahl von Dimensionen umfasst, wobei der reduzierte Steuerparameterraum eine zweite Anzahl von Dimensionen umfasst und wobei die erste Anzahl von Dimensionen größer als die zweite Anzahl von Dimensionen ist,
wobei der reduzierte Steuerparameterraum eine riemannsche Mannigfaltigkeit oder ein Teilraum einer riemannschen Mannigfaltigkeit ist und wobei die Bayes'sche Optimierung einen Gauß'schen Prozess als Ersatzmodell verwendet, das einen von der induzierten Metrik der riemannschen Mannigfaltigkeit oder dem Teilraum der riemannschen Mannigfaltigkeit abhängigen Nullraum verwendet,
wobei der ursprüngliche Steuerparameterraum unter Verwendung eines Algorithmus einer verschachtelten Hauptkugel, wobei der ursprüngliche Parameterraum eine Kugelmannigfaltigkeit ist, oder unter Verwendung eines Orthonormalprojektionsalgorithmus, wobei der ursprüngliche Parameterraum eine Mannigfaltigkeit einer symmetrischen positiv definiten, SPD, Matrix ist, in einen reduzierten Steuerparameterraum umgewandelt wird;
Bestimmen (502) eines Bewertungspunkts der Zielfunktion im reduzierten Steuerparameterraum durch Suchen eines Optimums einer Erfassungsfunktion in einer iterativen Suche, umfassend, in jeder Iteration,

• Aktualisieren (502A) eines möglichen Bewertungspunkts unter Verwendung einer Suchrichtung in einem Tangentenraum des reduzierten Steuerparameterraums am möglichen Bewertungspunkt;
• Abbilden (502B) des aktualisierten möglichen Bewertungspunkts vom Tangentenraum auf den reduzierten Steuerparameterraum und
• Verwenden (502c) des abgebildeten aktualisierten möglichen Bewertungspunkts als möglichen Bewertungspunkt für eine nächste Iteration, bis ein Stoppkriterium erfüllt ist; und

Abbilden (503) des bestimmten Bewertungspunkts vom reduzierten Steuerparameterraum auf den ursprünglichen Steuerparameterraum.

2. Verfahren nach Anspruch 1, wobei der Schritt des Bestimmens (502) eines Bewertungspunkts der Zielfunktion im reduzierten Steuerparameterraum durch Suchen eines Optimums einer Erfassungsfunktion in einer iterativen Suche ferner umfasst: wobei die Steuerparameterwerte durch Modellparameterwerte eines Gauß'schen Mischverteilungsmodells beschrieben werden, wobei die Zielfunktion in eine Vielzahl von Hilfszielfunktionen zerlegt wird, wobei die Erfassungsfunktion in eine Vielzahl von Hilfserfassungsfunktionen zerlegt wird, wobei jede Hilfszielfunktion der Vielzahl von Hilfszielfunktionen einer Hilfserfassungsfunktion zugewiesen wird, wobei ein Zwischenbewertungspunkt einer Hilfszielfunktion im reduzierten Steuerparameterraum für jede Hilfszielfunktion der Vielzahl von Hilfszielfunktionen durch Suchen eines Optimums der jeweiligen Hilfserfassungsfunktion in der iterativen Suche bestimmt wird und wobei ein Bewertungspunkt unter Verwendung der Vielzahl von Zwischenbewertungspunkten bestimmt wird.

3. Verfahren nach Anspruch 2, wobei jede Hilfszielfunktion einen Modellparameterwert der Vielzahl von Modellparameterwerten umfasst.

4. Verfahren nach einem der Ansprüche 1 bis 3, wobei mindestens ein beobachteter Steuerparameterwert der beobachteten Steuerparameterwerte ein Steuerparameterwert im ursprünglichen Steuerparameterraum ist, der vor dem Durchführen der Bayes'schen Optimierung gemessen wird.

5. Verfahren nach einem der Ansprüche 1 bis 4, wobei der nichteuklidische ursprüngliche Steuerparameterraum eine riemannsche Mannigfaltigkeit oder ein Teilraum einer riemannschen Mannigfaltigkeit ist.

6. Verfahren nach einem der Ansprüche 1 bis 5, wobei der ursprüngliche Steuerparameterraum und der reduzierte Steuerparameterraum vom selben Typ von Parameterraum sind.

7. Verfahren nach einem der Ansprüche 1 bis 6, wobei der reduzierte Steuerparameterraum eine Kugel oder eine Mannigfaltigkeit von symmetrischen positiv definiten Matrizen ist.

8. Verfahren nach einem der Ansprüche 1 bis 7, umfassend ein Bestimmen einer Suchrichtung für den abgebildeten aktualisierten möglichen Bewertungspunkt durch Modifizieren des Gradienten der Erfassungsfunktion am abgebildeten aktualisierten möglichen Bewertungspunkt um ein Vielfaches der Suchrichtung am möglichen Bewertungspunkt, der auf den Tangentenraum des reduzierten Steuerparameterraums am abgebildeten aktualisierten möglichen Bewertungspunkt abgebildet ist, durch Paralleltransport.

9. Verfahren nach einem der Ansprüche 1 bis 8, umfassend ein Abbilden des aktualisierten möglichen Bewertungspunkts vom Tangentenraum auf den reduzierten Steuerparameterraum unter Verwendung der Exponentialabbildung des Tangentenraums am möglichen Bewertungspunkt.

10. Verfahren nach einem der Ansprüche 1 bis 9, wobei die Zielfunktion eine gewünschte Position eines Teils des Roboters darstellt.

11. Verfahren nach einem der Ansprüche 1 bis 10, wobei die Parameterwerte Steifigkeit, Trägheit, Manipulierbarkeit, Ausrichtung oder Pose darstellen.

12. Robotersteuerung, die konfiguriert ist zur Durchführung des Verfahrens nach einem der Ansprüche 1 bis 11.

13. Computerprogramm, das Anweisungen umfasst, die bei Ausführung durch einen Prozessor veranlassen, dass der Prozessor ein Verfahren nach einem der Ansprüche 1 bis 11 durchführt.

14. Computerlesbares Medium, das Anweisungen speichert, die bei Ausführung durch einen Prozessor veranlassen, dass der Prozessor ein Verfahren nach einem der Ansprüche 1 bis 11 durchführt.

**Revendications**

1. Procédé mis en œuvre par ordinateur pour commander un robot (100) au moyen de valeurs de paramètres de commande provenant d'un espace de paramètres de commande d'origine non-euclidien, comprenant :

l'exécution d'une optimisation bayésienne d'une fonction d'objectif représentant un objectif de commande souhaité du robot sur l'espace de paramètres de commande d'origine pour des valeurs de paramètres de commande observées dans l'espace de paramètres de commande d'origine ; et

la commande du robot en fonction d'une valeur de paramètre de commande de l'espace de paramètres de commande d'origine trouvée dans l'optimisation bayésienne ; **caractérisé en ce que** l'optimisation bayésienne comprend :

la transformation (501) de l'espace de paramètres de commande d'origine en un espace de paramètres de commande réduit au moyen des valeurs de paramètres de commande observées, l'espace de paramètres de commande d'origine comprenant un premier nombre de dimensions, l'espace de paramètres de commande réduit comprenant un deuxième nombre de dimensions, et le premier nombre de dimensions étant supérieur au deuxième nombre de dimensions,

l'espace de paramètres de commande réduit étant un collecteur riemannien ou un sous-espace d'un collecteur riemannien et l'optimisation bayésienne utilisant un processus gaussien comme modèle de substitution ayant un noyau dépendant de la métrique induite du collecteur riemannien ou du sous-espace du collecteur riemannien,

l'espace de paramètres de commande d'origine étant transformé en un espace de paramètres de commande réduit au moyen d'un algorithme de sphère principale imbriquée, l'espace de paramètres d'origine étant un collecteur de sphères, ou au moyen d'un algorithme de projection orthonormée, l'espace de paramètres d'origine étant un collecteur d'une matrice définie positive symétrique (SPD) ;

la détermination (502) d'un point d'évaluation de la fonction d'objectif dans l'espace de paramètres de commande réduit par recherche d'un optimum d'une fonction d'acquisition dans une recherche itérative, comprenant, à chaque itération,

• la mise à jour (502A) d'un point d'évaluation candidat en utilisant une direction de recherche dans un espace tangent de l'espace de paramètres de commande réduit au niveau du point d'évaluation candidat ;
• l'application (502B) du point d'évaluation candidat mis à jour de l'espace tangent sur l'espace de paramètres de commande réduit ; et
• l'utilisation (502C) du point d'évaluation candidat mis à jour et appliqué en tant que point d'évaluation candidat pour une prochaine itération jusqu'à ce qu'un critère d'arrêt soit rencontré ; et

l'application (503) du point d'évaluation déterminé de l'espace de paramètres de commandes réduit sur l'espace de paramètres de commande d'origine.

2. Procédé selon la revendication 1, dans lequel l'étape de détermination (502) d'un point d'évaluation de la fonction d'objectif dans l'espace de paramètres de commande réduit par recherche d'un optimum d'une fonction d'acquisition dans une recherche itérative comprenant en outre : le fait que les valeurs de paramètres de commande soient décrites par des valeurs de paramètres d'un modèle de mélange gaussien, le fait que la fonction d'objectif soit décomposée une pluralité de fonctions d'objectifs auxiliaires, le fait que la fonction d'acquisition soit décomposée en une pluralité de fonctions d'acquisitions auxiliaires, le fait que chaque fonction d'objectif auxiliaire de la pluralité de fonctions d'objectifs auxiliaires soit affectée à une fonction d'acquisition auxiliaire, le fait qu'un point d'évaluation intermédiaire d'une fonction d'objectif auxiliaire soit déterminé dans l'espace de paramètres de commande réduit pour chaque fonction d'objectif auxiliaire de la pluralité de fonctions d'objectifs auxiliaires par recherche d'un optimum de la fonction d'acquisition auxiliaire respective dans la recherche itérative, et le fait qu'un point d'évaluation soit déterminé au moyen de la pluralité de points d'évaluation intermédiaires.

3. Procédé selon la revendication 2, dans lequel chaque fonction d'objectif auxiliaire comprend une valeur de paramètre de modèle parmi la pluralité de valeurs de paramètres de modèle.

4. Procédé selon l'une quelconque des revendications 1 à 3, dans lequel au moins une valeur de paramètre de commande observée parmi les valeurs de paramètres de commande observées est une valeur de paramètre de commande dans l'espace de paramètres de commande d'origine mesurée avant l'exécution de l'optimisation bayésienne.

5. Procédé selon l'une quelconque des revendications 1 à 4, dans lequel l'espace de paramètres de commande d'origine non-euclidien est un collecteur riemannien ou un sous-espace d'un collecteur riemannien.

6. Procédé selon l'une quelconque des revendications 1 à 5, dans lequel l'espace de paramètres de commande d'origine et l'espace de paramètres de commande réduit sont du même type d'espace de paramètres.

7. Procédé selon l'une quelconque des revendications 1 à 6, dans lequel l'espace de paramètres de commande réduit est une sphère ou un collecteur de matrices définies positives symétriques.

8. Procédé selon l'une quelconque des revendications 1 à 7, comprenant la détermination d'une direction de recherche pour le point d'évaluation candidat mis à jour et appliqué par modification du gradient de la fonction d'acquisition au point d'évaluation candidat mis à jour et appliqué par un multiple de la direction de recherche au point d'évaluation candidat appliqué sur l'espace tangent de l'espace de paramètres de commande réduit au point d'évaluation candidat mis à jour et appliqué par transport parallèle.

9. Procédé selon l'une quelconque des revendications 1 à 8, comprenant l'application du point d'évaluation candidat mis à jour de l'espace tangent sur l'espace de paramètres de commande réduit au moyen de l'application exponentielle de l'espace tangent au point d'évaluation candidat.

10. Procédé selon l'une quelconque des revendications 1 à 9, dans lequel la fonction d'objectif représente la position souhaitée d'une partie du robot.

11. Procédé selon l'une quelconque des revendications 1 à 10, dans lequel les valeurs de paramètres représentent la rigidité, l'inertie, la manipulabilité, l'orientation ou la pose.

12. Contrôleur de robot configuré pour exécuter le procédé selon l'une quelconque des revendications 1 à 11.

13. Programme informatique comprenant des instructions qui, lorsqu'elles sont exécutées par un processeur, amènent le processeur à exécuter un procédé selon l'une quelconque des revendications 1 à 11.

14. Support lisible par ordinateur stockant des instructions qui, lorsqu'elles sont exécutées par un processeur, amènent le processeur à exécuter un procédé selon l'une quelconque des revendications 1 à 11.

Fig. 1

**Fig. 2**

Fig. 3

Fig. 4

500

501

502A

502B

502C

502

503

Fig. 5

**EP 3 838 503 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **N. JAQUIER et al.** *Bayesian Optimization Meets Riemannian Manifolds in Robot Learning,* 11 October 2019
- **WANG et al.** Bayesian Optimization in High Dimensions via Random Embeddings. *Proceedings of the Twenty-Third International Joint Conference on Artificial Intelligence,* 2013
- **ZANG et al.** High Dimensional Bayesian Optimization via Supervised Dimension Reduction. *arXiv: 1907.08953,* 2019
- **MORICONI et al.** High-dimensional Bayesian optimization using low-dimensional feature spaces. *arXiv: 1902.10675,* 2019
- **ANTONOVA et al.** Bayesian Optimization in Variational Latent Spaces with Dynamic Compression. *arXiv: 1907.04796,* 2019
- **RANA et al.** High Dimensional Bayesian Optimization with Elastic Gaussian Process. *Proceedings of the 34th International Conference on Machine Learning,* 2017
- **LI et al.** High Dimensional Bayesian Optimization Using Dropout. *Proceedings of the Twenty-Sixth International Joint Conference on Artificial Intelligence,* 2017
- **YUAN et al.** Bayesian Optimization for Whole-Body Control of High Degrees of Freedom Robots through Reduction of Dimensionality. *IEEE Robotics and Automation Letters,* 2019
- **KANDASAMY et al.** High Dimensional Bayesian Optimization and Bandits via Additive Models. *arXiv: 1503.01673,* 2016
- **LI et al.** High Dimensional Bayesian Optimization via Restricted Projection Pursuit Models. *Proceedings of the 19th International Conference on Artificial Intelligence and Statistics,* 2016
- **MUTNY et al.** Effective High Dimensional Bayesian Optimization with Additivity and Quadrature Fourier Features. *32nd Conference on Neural Information Processing Systems,* 2018